# EUROPEAN PATENT SPECIFICATION

(11) **EP 4 266 295 B1**
(45) Date of publication and mention of the grant of the patent: **21.10.2026**
(21) Application number: 21899302.0
(22) Date of filing: 18.05.2021
(51) Int. Cl.: G02F 1/1333

(54) **DISPLAY SCREEN HOUSING AND DISPLAY SCREEN**
ANZEIGEBILDSCHIRMGEHÄUSE UND ANZEIGEBILDSCHIRM
BOÎTIER D'ÉCRAN D'AFFICHAGE ET ÉCRAN D'AFFICHAGE

(30) Priority: 15.12.2020 CN 202011492364
(43) Date of publication of application: 25.10.2023
(73) Proprietor: TCL Business Information Technology (Huizhou) Co. Ltd., Huizhou, Guangdong 518055 (CN); Shenzhen Huasheng Software Technology Co., Ltd., Shenzhen, Guangdong 518101 (CN)
(72) Inventor: YE, Xiongbo, Huizhou, Guangdong 518055 (CN); LI, Haiyan, Huizhou, Guangdong 518055 (CN)
(74) Representative: Patentanwälte Olbricht Buchhold Keulertz
(86) International application number: PCT/CN2021/094460
(87) International publication number: WO 2022/127020

(56) References cited:
- CN-A- 104 575 274
- CN-A- 109 660 640
- CN-A- 111 258 104
- CN-U- 208 705 767
- CN-U- 210 836 037
- CN-U- 211 479 090
- CN-U- 211 906 844
- CN-U- 211 979 639
- CN-U- 211 979 639
- CN-U- 212 433 536

## Description

### BACKGROUND OF DISCLOSURE

### 1. Field of disclosure

The present disclosure relates to a technical field of display devices, and in particular, to a display screen shell and a display screen.

### 2. Description of Prior Art

At present, interactive education and conference panels mainly use infrared touch embodiment as a mainstream technical embodiment, and most of their structural forms adopt a frame mode. In a frame embodiment, there is a gap between a tempered glass and a display panel, so that there is a clear hollow feeling when writing on the display screen of the frame embodiment.

Due to an existence of the gap between the tempered glass and the display panel in the prior art, the gap causes visual difference during writing and displaying, resulting in a hollow feeling, and resulting in poor touch writing experience and poor visual experience. CN211979639U is a related prior art for this field. More particularly, CN211979639U discloses that an infrared touch display screen comprises a frame, a filter strip, a display device and an infrared assembly, wherein the display device and the infrared assembly are connected with the frame. CN111258104A discloses display screen shell holding together a protective glass layer and a display panel.

Hence, the prior art is defective, and it is urgent to improve it.

### BRIEF SUMMARY OF DISCLOSURE

The invention is set out in the appended set of claims.

### BRIEF DESCRIPTION OF DRAWINGS

For more clearly understanding above content of the present disclosure, the following text will briefly introduce the accompanying drawings used in the preferred embodiment of the present invention. It is obvious that the accompanying drawings in the following description are only some embodiments of the present invention. For the technical personnel of the field, other drawings can also be obtained from these drawings without paying creative work.
FIG. 1 is a cross-sectional view of a display screen in an embodiment of the present disclosure.
FIG. 2 is a cross-sectional view of a partial structure of a display screen shell in an embodiment of the present disclosure.

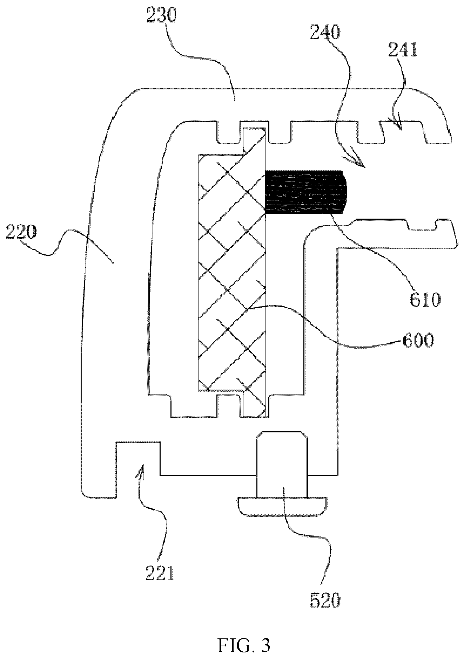

FIG. 3 is a cross-sectional view of an internal structure of a profile frame in an embodiment of a display screen shell of the present disclosure.
FIG. 4 is a cross-sectional view of a pressing portion of a display screen shell in an embodiment of the present disclosure.
FIG. 5 is a cross-sectional view of the display screen in another embodiment of the present disclosure.

Labels in the figures: 100 middle frame; 110 first flexible pad; 120 second flexible pad; 130 bottom plate; 140 first supporting plate; 141 first stepped portion; 150 second supporting plate; 151 second stepped portion; 160 fixing post; 161 limit block; 200 profile frame; 210 pressing portion; 211 clipping bar; 212 compressing block; 220 frame; 221 receiving groove; 230 bending portion; 240 receiving cavity; 241 groove; 300 display panel; 400 tempered glass; 500 backplate; 510 folded edge; 520 screw; 600 infrared circuit board; 610 infrared emitting tube; 700 backlight module.

### DETAILED DESCRIPTION OF PREFERRED EMBODIMENTS

The present application provides a display screen shell and a display screen. In order to make the objectives, technical embodiment, and advantages of the present disclosure clearer, the present disclosure will be described in further detail below with reference to the accompanying drawings and embodiment. It should be understood that the specific embodiment described herein are only used to explain the present disclosure, but not to limit the present disclosure.

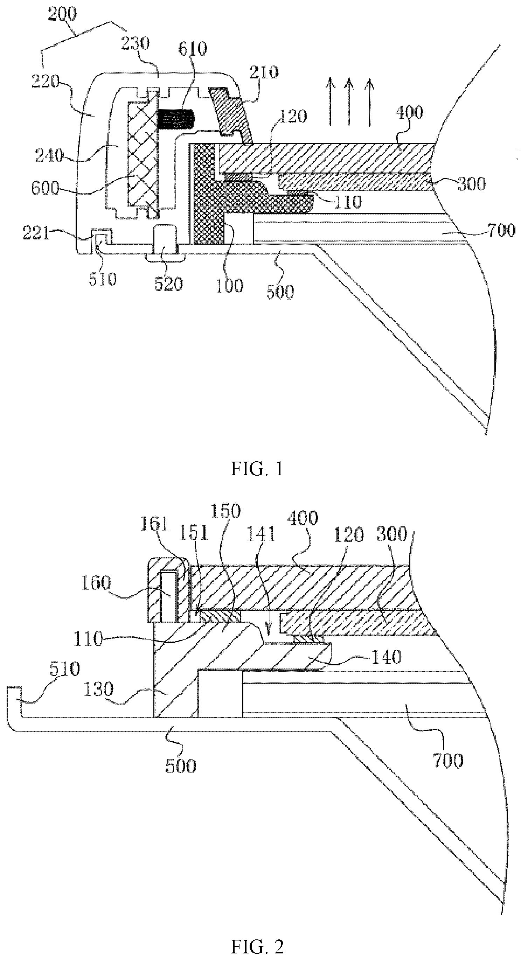

As shown in FIG. 1 and FIG. 2, the embodiment of the present disclosure provides a display screen shell, as defined in appended claim 1, which is used to connect a display panel 300 and a tempered glass 400. The display screen shell includes: a middle frame 100; a first flexible pad 110, a second flexible pad 120, and a pressing portion 210. For the convenience of structural description, the direction toward a center of the display panel 300 is an inner side, and a direction away from the center of the display panel 300 is an outer side. One side of the display panel 300 that emits light (in a direction of an arrow in FIG. 1) is a light-emitting side, and when the display screen is used again, a user is located on the light-emitting side of the display panel 300. The first flexible pad 110 is disposed on the middle frame 100, and the display panel 300 is disposed on the first flexible pad 110. The second flexible pad 120 is disposed on the middle frame 100, and the tempered glass 400 is disposed on the second flexible pad 120. The tempered glass 400 is disposed on the light-emitting side of the display panel 300. The pressing portion 210 is disposed on a light-emitting surface of the tempered glass 400 and is in contact with the tempered glass 400. That is, the pressing portion 210 is pressed on the tempered glass 400, thereby compressing the tempered glass 400 to the display panel 300, and there will be no gap on the attaching surface.

In this embodiment, by disposing the first flexible pad 110 on the middle frame 100, the display panel 300 is disposed on the first flexible pad 110, and by disposing the second flexible pad 120 on the middle frame 100, the tempered glass 400 is disposed on the second flexible pad 120. The elastic force generated by the flexible pads makes the display panel 300 and the tempered glass 400 fit together and assembled together by force, so that there is no gap between the tempered glass 400 and the display panel 300, and 0-distance-attaching is achieved. The tempered glass 400 is pressed by the pressing portion 210, so that the tempered glass 400 and a liquid crystal screen are pressed together at the edge, so that the tempered glass 400 and the display panel 300 are attached together effectively for a long time, so that there is no gap at the attaching place, and finally achieve extremely small parallax, so that there is no hollowing feeling during writing, so that a writing experience and visual experience are optimal.

In a specific structure of this embodiment, the display screen shell further includes a backplate 500. The backplate 500 is located on one side of the display panel 300 facing away from the light-emitting side of the display panel 300, and the middle frame 100 is disposed on the backplate 500. The middle frame 100 specifically includes: a bottom plate 130, a first supporting plate 140, and a second supporting plate 150. The bottom plate 130 is disposed on the backplate 500 and extends along the light-emitting side of the display panel 300. The first supporting plate 140 is disposed on one side of the bottom plate 130 facing away from the backplate 500. The first flexible pad 110 is bonded on the first supporting plate 140. The second supporting plate 150 is disposed on one side of the first supporting plate 140 facing away from the backplate 500, and the second flexible pad 120 is bonded on the second supporting plate 150. The first supporting plate 140 supports the display panel 300 through the first flexible pad 110, and the second supporting plate 150 supports the tempered glass 400 through the second flexible pad 120, thus forming a stable support for the display panel 300 and the tempered glass 400. The first flexible pad 110 and the second flexible pad 120 are both silicone rubber pads, and a hardness of the first flexible pad 110 is greater than a hardness of the second flexible pad 120. In this way, when the tempered glass 400 is pressed by the pressing portion 210, an amount of compression of the first flexible pad 110 is small, and an amount of compression of the second flexible pad 120 is larger, so that the tempered glass 400 can be more easily attached to the display panel 300, and 0-gap state is formed. Specifically, it can be set as follows: using Shore Hardness Standard, the hardness of the first flexible pad 110 is 60 degrees, and the hardness of the second flexible pad 120 is 30 degrees. In addition, a thickness of the first flexible pad 110 along the light-emitting direction is greater than a thickness of the second flexible pad 120 along the light-emitting direction, so that when the tempered glass 400 is pressed down, the downward movement of the tempered glass 400 is large, while the downward movement of the display panel 300 is small. So that the tempered glass 400 and the display panel 300 are attached more closely.

An inner side surface of the first supporting plate 140 protrudes from an inner side surface of the second supporting plate 150, so that there is a first stepped portion 141 between the inner side surface of the second supporting plate 150 and a surface of the first supporting plate 140 facing towards the display panel 300. The first stepped portion 141 is located outside of an edge of the display panel 300, and the first step 141 limits a position of the display panel 300, thereby facilitating installation of the display panel 300.

The middle frame 100 further includes a fixing post 160, and the fixing post 160 is connected to one side of the second supporting plate 150 facing away from the backplate 500, and the fixing post 160 is located outside of the second flexible pad 120. The fixing post 160 extends along the light-emitting direction, and a second stepped portion 151 is formed between the fixing post 160 and the second supporting plate 150. The tempered glass 400 is limited by the second stepped portion 151 to facilitate installation of the tempered glass 400. A limit block 161 is disposed on the fixing post 160, and the limit block 161 is located between the fixing post 160 and a lateral side of the tempered glass 400. Usually, a black silk screen area is set on an edge of the tempered glass 400, and the limit block 161 can be used to accurately limit a position, so that the black silk screen area of the tempered glass 400 will not be displaced in the module, so that the assembly accuracy of the tempered glass 400 can be guaranteed as an external part. Specifically, the limit block 161 is a U-shaped limit block, and the U-shaped limit block is sleeved on the fixing post 160, so that the U-shaped limit block covers an inner side and an outer side of the fixing post 160. After the U-shaped limit block and the fixing post 160 are assembled, the tempered glass 400 can be precisely positioned to achieve direct stacking assembly on the assembly line. There is no need to use the split assembly form of tempered glass + liquid crystal display (LCD) screen + aluminum frame, which improves assembly accuracy and production efficiency.

The display screen shell also includes a profile frame 200, the profile frame 200 is detachably connected to the backplate 500 through screw 520. The profile frame 200 is located outside of the middle frame 100, and the pressing portion 210 is disposed on the profile frame 200. The expressing portion 210 is supported by the profile frame 200. When the profile frame 200 is connected to the backplate 500, the pressing portion 210 is compressed to the tempered glass 400. A side of the pressing portion 210 facing towards the light-emitting side of the tempered glass 400 has a certain amount of interference fit with the tempered glass 400, so that a pressing force is generated through the interference fit, thereby compressing the tempered glass 400. The screw 520 can adjust an overall fitting-gap effectively, tightening the screw 520 enables the profile frame 200 to drive the pressing portion 210 to press the tempered glass 400 and the display panel 300 to achieve a 0-gap state.

The profile frame 200 specifically includes: a frame 220 and a bending portion 230. The frame body 220 is disposed on the backplate 500, and the frame 220 is located on the side of the middle frame 100 facing away from the display panel 300, that is, outside of the middle frame 100. The bending portion 230 is connected to the frame 220. The bending portion 230 is located on the side of the middle frame 100 facing away from the backplate 500, and the pressing portion 210 is connected to the bending portion 210. The profile frame 200 wraps the middle frame 100 through the frame 220 and the bending portion 230, so that the profile frame 200 can achieve a stable fixation as an external part.

The profile frame 200 further includes a receiving cavity 240 defined between the frame 220 and the bending portion 230, and a groove 241 is formed on an inner wall of a partial portion of the receiving cavity 240 of the bending portion 230. An opening is formed on an inner side of the bending portion 230, and the opening is connected with the receiving cavity 240. The groove 241 is located at the opening and the pressing portion 210 is inserted in the opening. The structure of the pressing portion 210 specifically includes: a clipping bar 211 and a compressing block 212. The clipping bar 211 is inserted into the groove 241, the pressing portion 210 is fixed by the clipping bar 211, and the compressing block 212 is connected to the clipping bar 211 and protrudes from the receiving cavity 240. The compressing block 212 abuts on the light-emitting surface of the tempered glass 400 after passing through the opening. An inner side of the compressing block 212 is inclined inwardly along an opposite direction of light-emitting direction, so that the edge of the display screen forms an inclined angle, which improves the appearance experience.

In order to realize an infrared touch writing function, an infrared circuit board 600 is disposed in the receiving cavity 240, an infrared emitting tube 610 is disposed on the infrared circuit board 600, the infrared emitting tube 610 is disposed in the receiving cavity 240, and an emitting end of the infrared emitting tube 610 faces towards the pressing portion 210. In this way, the infrared emitting tube 610 emits infrared rays, and the infrared rays pass through the pressing portion 210, so that the infrared rays can be located on the light-emitting side of the tempered glass 400. When writing on the tempered glass 400, the infrared rays can be sensed to realize the writing function. The pressing portion 210 is a light filter bar, which can filter out stray light entering an infrared sensor, so that sensing is more accurate and sensitive.

The edge of the backplate 500 is provided with a folded edge 510. A receiving groove 221 is defined on a surface of the frame 220 facing towards the backplate 500, and the folded edge 510 is located in the receiving groove 221. In this way, the edge of the backplate 500 is clamped and embedded in the profile frame 200, the backplate 500 is edge-sealed, and the edge of the backplate 500 can be prevented from being exposed, so that the structure is stable and more beautiful.

Based on a same concept, the present disclosure also proposes a display screen, the display screen includes: the display screen shell as described above, a display panel 300 disposed on the display screen shell, a tempered glass 400 disposed on the display screen shell, and a backlight module 700. The backlight module 700 provides backlight for the display panel 300 to realize a display function. The backlight module 700 is disposed on the display screen shell, and is located on the side of the display panel 300 facing away from the tempered glass 400. Specifically, an installation space is provided between the first supporting plate 140 in the middle frame 100 and the backplate 500 and the backlight module 700 is inserted into the installation space for fixing. An inner side of the bottom plate 130 limits an edge of the backlight module 700, so as to facilitate the installation of the backlight module 700.

In a summary, the present application proposes a display screen shell and a display screen. By disposing the first flexible pad 110 on the middle frame 100, the display panel 300 is disposed on the first flexible pad 110, through disposing the second flexible pad 110 on the middle frame 100, the tempered glass 400 is disposed on the second flexible pad 120, and the display panel 300 is assembled with the tempered glass 400 by the elastic force generated by the flexible pads. There will be no gap between the tempered glass 400 and the display panel 300, achieving a 0-distance attaching. The tempered glass 400 is squeezed by the pressing portion 210, so that the tempered glass 400 and the liquid crystal screen are pressed together at the edge, so that the tempered glass 400 and the display panel 300 are attached together effectively for a long time, and no gap is generated at the attaching place, and finally achieve extremely small parallax, so that there is no hollowing feeling during writing, so that the writing experience and visual experience are optimal.

In addition, compared with the prior art, this embodiment does not require the front iron frame of the existing module, thereby reducing the cost of bill of material parts, making assembly simpler and improving assembly efficiency.

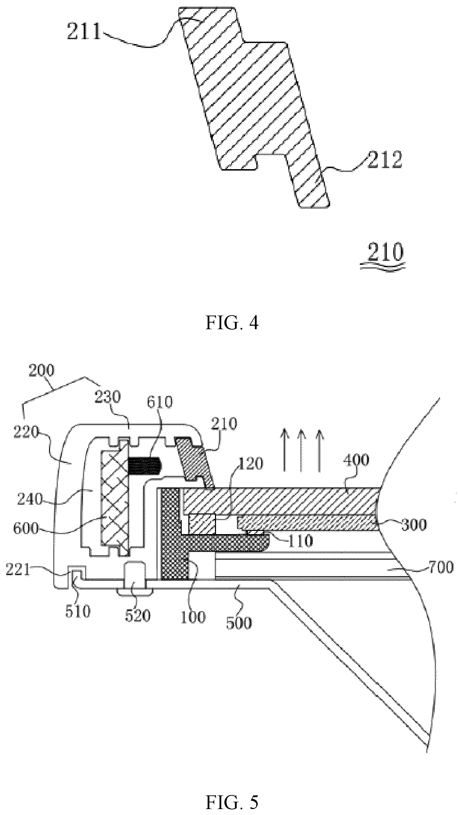

As shown in FIG. 5, this embodiment proposes another display screen shell for connecting the display panel 300 and the tempered glass 400, wherein, the display screen shell includes: a middle frame 100 and a pressing portion 210.

Wherein the middle frame 100 is used to support the display panel 300, and the pressing portion 210 abuts the tempered glass 400, so that the tempered glass 400 is attached to the display panel 300. It should be noted that the tempered glass 400 may be attached to the display panel 300 partially or completely, which depends on magnitude of the force exerted by the pressing portion 210 on the tempered glass 400.

The display screen shell further includes a backplate 500 and a middle frame 100, the middle frame 100 is disposed on the backplate 500. The middle frame 100 includes: a bottom plate 130 and a supporting plate. The bottom plate 130 is fixed on the backplate 500, and the supporting plate is connected to the bottom plate 130. The supporting plate is used for supporting the display panel 300.

In this embodiment, the display screen shell includes a first flexible pad 110 located between the middle frame 100 and the display panel 300.

In another embodiment, the display screen shell includes a first flexible pad 110 and a second flexible pad 120, both the first flexible pad 110 and the second flexible pad 120 are located on the supporting plate.

During attaching process of the display panel 300 and the tempered glass 400, the first flexible pad 110 and the second flexible pad 120 are both used to protect the display panel 300, so as to avoid damage to the display panel 300 due to lack of buffer force during mechanical contact between the display panel 300 and the tempered glass 400.

The supporting plate includes a first supporting plate 140 and a second supporting plate 150, and the first flexible pad 110 and the second flexible pad 120 are respectively disposed on the first supporting plate 140 and the second supporting plate 150. Compared with the above-mentioned embodiment, heights of the first supporting plate 140 and the second supporting plate 150 in this embodiment are same. Of course, in other embodiment, heights of the first supporting plate 140 and the second supporting plate 150 can be adjusted freely according to actual needs.

Except for the above-mentioned structure, which is different from that of the display screen shell described in the above embodiment, other structures are same as those of the display screen shell described in the above embodiment, and will not be repeated here.

The above descriptions are only a preferred embodiment of the present disclosure, and are not intended to limit the present disclosure.

## Claims

1. A display screen shell, used to connect a display panel (300) and a tempered glass (400), wherein the display screen shell comprises:
a middle frame (100);
a first flexible pad (110), wherein the first flexible pad (110) is disposed on the middle frame (100), and the display panel (300) is disposed on the first flexible pad (100);
a second flexible pad (120), wherein the second flexible pad (120) is disposed on the middle frame (100), and the tempered glass (400) is disposed on the second flexible pad (120) and located at a light-emitting side of the display panel (300); and
a pressing portion (210), wherein the pressing portion (210) is disposed on a light-emitting surface of the tempered glass (400) and in contact with the tempered glass (400);
wherein the first flexible pad (110) and the second flexible pad (120) are both silicone rubber pads, and a hardness of the first flexible pad (110) is greater than a hardness of the second flexible pad (120); the display panel (300) and the tempered glass (400) are in direct contact and pressed tightly against each other; by pressing the tempered glass (400) with the pressing portion (210), the tempered glass (400) is attached to the display panel (300) through elastic deformation of the first flexible pad (110) and the second flexible pad (120), thereby achieving a zero-gap attachment.

2. The display screen shell as claimed in claim 1, wherein the display screen shell further comprises a backplate (500), the middle frame (100) disposed on the backplate (500);
the middle frame (100) comprises:
a bottom plate (130), the bottom plate (130) disposed on the backplate (500) and extending along the light-emitting side of the display panel (300);
a first supporting plate (140), the first supporting plate (140) disposed on one side of the bottom plate (130) facing away from the backplate (500), the first flexible pad (110) disposed on the first supporting plate (140);
a second supporting plate (150), the second supporting plate (150) disposed on one side of the first supporting plate (140) facing away from the backplate (500), the second flexible pad (120) disposed on the second supporting plate (150).

3. The display screen shell as claimed in claim 2, wherein the middle frame further comprises:
a fixing post (160), the fixing post (160) connected to one side of the second supporting plate (150) facing away from the backplate (500);
the fixing post (160) is provided with a limit block (161), the limit block (161) is located between the fixing post (160) and a lateral side of the tempered glass (400).

4. The display screen shell as claimed in claim 2, wherein the display screen shell further comprises:
a profile frame (200), the profile frame (200) connected to the backplate (500), located outside of the middle frame (100), the pressing portion (210) disposed on the profile frame (200).

5. The display screen shell as claimed in claim 4, wherein the profile frame (200) comprises:
a frame (220), the frame (220) disposed on the backplate (500) and located at one side of the middle frame (100) facing away from the display panel (300);
a bending portion (230), the bending portion (230) connected to the frame (220), the bending portion (230) located at one side of the middle frame (100) facing away from the backplate (500), the pressing portion (210) connected to the bending portion (230).

6. The display screen shell as claimed in claim 5, wherein the profile frame (200) further comprises a receiving cavity (240) defined between the frame (220) and the bending portion (230), an inner wall of the receiving cavity (240) is provided with a groove (241);
the pressing portion (210) comprises:
a clipping bar (211), the clipping bar (211) embedded in the groove (241);
a compressing block (212), the compressing block (212) connected to the clipping bar (211) and protruding from the receiving cavity (240), the compressing block (212) is in contact with the light-emitting surface of the tempered glass (400).

7. The display screen shell as claimed in claim 6, wherein the receiving cavity (240) comprises an infrared emitting tube (610), an emitting end of the infrared emitting tube (610) faces towards the pressing portion (210).

8. The display screen shell as claimed in claim 5, wherein a folded edge (510) is disposed at an edge of the backplate (500), a receiving groove (221) is defined at a surface of the frame (220) facing towards the backplate (500), the folded edge (510) is located in the receiving groove (221).

9. The display screen shell as claimed in claim 1, wherein the pressing portion (210) is a light filter bar.

10. A display screen, comprising: the display screen shell as claimed in claim 1;
a display panel (300) being disposed on the display screen shell; a tempered glass (400) disposed on the display screen shell and in contact with the pressing portion (210), making the tempered glass (400) attach to the display panel (300); and
a backlight module (700), the backlight module (700) disposed on the display screen shell and located at one side of the display panel (300) facing away from the tempered glass (400).

## Patentansprüche

1. Ein Displaygehäuse, das zur Verbindung eines Displaypanels (300) und eines Hartglases (400) dient, wobei das Displaygehäuse Folgendes umfasst:
ein Mittelrahmen (100);
ein erstes flexibles Polster (110), wobei das erste flexible Polster (110) auf dem Mittelrahmen (100) angeordnet ist und das Displaypanel (300) auf dem ersten flexiblen Polster (110) angeordnet ist;
ein zweites flexibles Polster (120), wobei das zweite flexible Polster (120) auf dem Mittelrahmen (100) angeordnet ist und das Hartglas (400) auf dem zweiten flexiblen Polster (120) angeordnet ist und sich an einer lichtemittierenden Seite des Displaypanels (300) befindet; und
ein Andrückabschnitt (210), wobei der Andrückabschnitt (210) auf einer lichtemittierenden Oberfläche des Hartglases (400) angeordnet ist und mit dem Hartglas (400) in Kontakt steht;
wobei das erste flexible Polster (110) und das zweite flexible Polster (120) beide aus Silikonkautschuk bestehen und die Härte des ersten flexiblen Polsters (110) größer als die Härte des zweiten flexiblen Polsters (120) ist; das Displaypanel (300) und das Hartglas (400) in direktem Kontakt und sind fest aneinander gedrückt stehen; durch Andrücken des Hartglases (400) mit dem Andrückabschnitt (210) das Hartglas (400) durch elastische Verformung des ersten flexiblen Polsters (110) und des zweiten flexiblen Polsters (120) an dem Displaypanel (300) befestigt wird, wodurch eine spaltfreie Befestigung erreicht wird.

2. Das Displaygehäuse nach Anspruch 1, wobei das Displaygehäuse ferner eine Rückplatte (500) und den auf der Rückplatte (500) angeordneten Mittelrahmen (100) umfasst;
der Mittelrahmen (100) umfasst:
eine Bodenplatte (130), wobei die Bodenplatte (130) auf der Rückplatte (500) angeordnet ist und sich entlang der lichtemittierenden Seite des Displaypanels (300) erstreckt;
eine erste Trägerplatte (140), wobei die erste Trägerplatte (140) auf einer Seite der Bodenplatte (130) angeordnet ist, die von der Rückplatte (500) abgewandt ist, und das erste flexible Polster (110) auf der ersten Trägerplatte (140) angeordnet ist;
eine zweite Trägerplatte (150), wobei die zweite Trägerplatte (150) auf einer Seite der ersten Trägerplatte (140) angeordnet ist, die von der Rückplatte (500) abgewandt ist, und wobei das zweite flexible Polster (120) auf der zweiten Trägerplatte (150) angeordnet ist.

3. Das Displaygehäuse nach Anspruch 2, wobei der Mittelrahmen ferner umfasst:
ein Befestigungspfosten (160), wobei der Befestigungspfosten (160) mit einer Seite der zweiten Trägerplatte (150) verbunden ist, die von der Rückplatte (500) abgewandt ist;
der Befestigungspfosten (160) mit einem Anschlagblock (161) versehen ist, wobei sich der Anschlagblock (161) zwischen dem Befestigungspfosten (160) und einer Seitenkante des Hartglases (400) befindet.

4. Das Displaygehäuse nach Anspruch 2, wobei das Displaygehäuse ferner umfasst:
ein Profilrahmen (200), wobei der Profilrahmen (200) mit der Rückplatte (500) verbunden ist, sich außerhalb des Mittelrahmens (100) befindet und der Andrückabschnitt (210) am Profilrahmen (200) angeordnet ist.

5. Das Displaygehäuse nach Anspruch 4, wobei der Profilrahmen (200) Folgendes umfasst:
ein Rahmen (220), wobei der Rahmen (220) auf der Rückplatte (500) angeordnet ist und sich an einer Seite des Mittelrahmens (100) befindet, die von dem Displaypanel (300) abgewandt ist;
ein Biegeabschnitt (230), wobei der Biegeabschnitt (230) mit dem Rahmen (220) verbunden ist, der Biegeabschnitt (230) an einer Seite des Mittelrahmens (100) angeordnet ist, die von der Rückplatte (500) abgewandt ist, und der Andrückabschnitt (210) mit dem Biegeabschnitt (230) verbunden ist.

6. Das Displaygehäuse nach Anspruch 5, wobei der Profilrahmen (200) ferner einen zwischen dem Rahmen (220) und dem Biegeabschnitt (230) gebildeten Aufnahmeraum (240) aufweist, wobei eine Innenwand des Aufnahmeraums (240) mit einer Nut (241) versehen ist;
der Andrückabschnitt (210) umfasst:
eine Klemmleiste (211), wobei die Klemmleiste (211) in die Nut (241) eingelassen ist;
ein Druckblock (212), wobei der Druckblock (212) mit der Klemmleiste (211) verbunden ist und aus dem Aufnahmeraum (240) herausragt; der Druckblock (212) steht in Kontakt mit der lichtemittierenden Oberfläche des Hartglases (400).

7. Das Displaygehäuse nach Anspruch 6, wobei der Aufnahmeraum (240) eine Infrarotstrahlungsröhre (610) umfasst, wobei ein Strahlungsende der Infrarotstrahlungsröhre (610) zum Andrückabschnitt (210) hin ausgerichtet ist.

8. Das Displaygehäuse nach Anspruch 5, wobei an einer Kante der Rückplatte (500) eine umgebogene Kante (510) angeordnet ist, an einer der Rückplatte (500) zugewandten Oberfläche des Rahmens (220) eine Aufnahmnut (221) ausgebildet ist und sich die umgebogene Kante (510) in der Aufnahmnut (221) befindet.

9. Das Displaygehäuse nach Anspruch 1, wobei der Andrückabschnitt (210) eine Lichtfilterleiste ist.

10. Ein Bildschirm, umfassend: das Displaygehäuse gemäß Anspruch 1;
ein Displaypanel (300), das auf dem Displaygehäuse angeordnet ist; ein Hartglas (400), das auf dem Displaygehäuse angeordnet ist und mit dem Andrückabschnitt (210) in Kontakt steht, wodurch das Hartglas (400) am Displaypanel (300) befestigt wird; und
ein Hintergrundbeleuchtungsmodul (700), wobei das Hintergrundbeleuchtungsmodul (700) an dem Displaygehäuse angeordnet ist und sich an einer Seite des Displaypanels (300) befindet, die vom Hartglas (400) abgewandt ist.

## Revendications

1. Une coque d'écran d'affichage, destinée à relier un panneau d'affichage (300) et un verre trempé (400), la coque d'écran d'affichage comprenant :
un cadre intermédiaire (100) ;
un premier coussin souple (110), ce premier coussin souple (110) étant disposé sur le cadre intermédiaire (100), et le panneau d'affichage (300) étant disposé sur le premier coussin souple (110) ;
un deuxième coussin souple (120), le deuxième coussin souple (120) étant disposé sur le cadre intermédiaire (100), et le verre trempé (400) étant disposé sur le deuxième coussin souple (120) et situé du côté émetteur de lumière du panneau d'affichage (300) ; et
une partie de pression (210), ladite partie de pression (210) étant disposée sur une surface émettrice de lumière du verre trempé (400) et en contact avec ce dernier ;
dans lequel le premier coussin souple (110) et le deuxième coussin souple (120) sont tous deux des coussins en caoutchouc de silicone, et la dureté du premier coussin souple (110) est supérieure à celle du deuxième coussin souple (120) ; le panneau d'affichage (300) et le verre trempé (400) sont en contact direct et fermement pressés l'un contre l'autre ; en appuyant sur le verre trempé (400) à l'aide de la partie de pression (210), le verre trempé (400) est fixé au panneau d'affichage (300) grâce à la déformation élastique du premier coussin souple (110) et du deuxième coussin souple (120), ce qui permet d'obtenir une fixation sans jeu.

2. Coque d'écran d'affichage selon la revendication 1, dans laquelle la coque d'écran d'affichage comprend en outre une plaque arrière (500), le cadre intermédiaire (100) étant disposé sur la plaque arrière (500) ;
le cadre intermédiaire (100) comprend :
une plaque inférieure (130), ladite plaque inférieure (130) étant disposée sur la plaque arrière (500) et s'étendant le long du côté émetteur de lumière du panneau d'affichage (300) ;
une première plaque de support (140), ladite première plaque de support (140) étant disposée sur un côté de la plaque inférieure (130) opposé à la plaque arrière (500), le premier coussin souple (110) étant disposé sur la première plaque de support (140) ;
une deuxième plaque de support (150), la deuxième plaque de support (150) étant disposée d'un côté de la première plaque de support (140), à l'opposé de la plaque arrière (500), le deuxième coussin souple (120) étant disposé sur la deuxième plaque de support (150).

3. Coque d'écran d'affichage selon la revendication 2, dans laquelle le cadre intermédiaire comprend en outre :
un montant de fixation (160), ce montant de fixation (160) étant relié à l'un des côtés de la deuxième plaque de support (150) qui est opposé à la plaque arrière (500) ;
le montant de fixation (160) est muni d'un bloc de butée (161), ce bloc de butée (161) étant situé entre le montant de fixation (160) et un bord latéral du verre trempé (400).

4. Coque d'écran d'affichage selon la revendication 2, **caractérisée en ce que** la coque d'écran d'affichage comprend en outre :
un cadre profilé (200), ledit cadre profilé (200) étant relié à la plaque arrière (500) et situé à l'extérieur du cadre intermédiaire (100), la partie de pression (210) étant disposée sur le cadre profilé (200).

5. Coque d'écran d'affichage selon la revendication 4, dans laquelle le cadre profilé (200) comprend :
un cadre (220), ce cadre (220) étant disposé sur la plaque arrière (500) et situé sur l'un des côtés du cadre intermédiaire (100) opposé au panneau d'affichage (300) ;
une partie courbée (230), ladite partie courbée (230) étant reliée au cadre (220), ladite partie courbée (230) étant située d'un côté du cadre intermédiaire (100) opposé à la plaque arrière (500), la partie de pression (210) étant reliée à la partie courbée (230).

6. Coque d'écran d'affichage selon la revendication 5, dans laquelle le cadre profilé (200) comprend en outre une cavité de réception (240) définie entre le cadre (220) et la partie courbée (230), une paroi intérieure de la cavité de réception (240) étant pourvue d'une rainure (241) ;
la partie de pression (210) comprend :
une barre de serrage (211), ladite barre de serrage (211) étant encastrée dans la rainure (241) ;
un bloc de compression (212), ledit bloc de compression (212) étant relié à la barre de serrage (211) et faisant saillie hors de la cavité de réception (240), le bloc de compression (212) étant en contact avec la surface émettrice de lumière du verre trempé (400).

7. Coque d'écran d'affichage selon la revendication 6, dans laquelle la cavité de réception (240) comprend un tube émetteur d'infrarouges (610), l'extrémité émettrice du tube émetteur d'infrarouges (610) étant orientée vers la partie de pression (210).

8. Coque d'écran d'affichage selon la revendication 5, dans laquelle un rebord replié (510) est disposé au niveau d'un bord de la plaque arrière (500), une rainure de réception (221) est formée sur une surface du cadre (220) tournée vers la plaque arrière (500), et le rebord replié (510) est logé dans la rainure de réception (221).

9. Coque d'écran d'affichage selon la revendication 1, dans laquelle la partie de pression (210) est une barre de filtrage de la lumière.

10. Écran d'affichage, comprenant : la coque d'écran d'affichage selon la revendication 1 ;
un panneau d'affichage (300) disposé sur la coque d'écran d'affichage ; un verre trempé (400) disposé sur la coque d'écran d'affichage et en contact avec la partie de pression (210), de sorte que le verre trempé (400) soit fixé au panneau d'affichage (300) ; et
un module de rétroéclairage (700), ce module de rétroéclairage (700) étant disposé sur la coque d'écran d'affichage et situé sur un côté du panneau d'affichage (300) opposé au verre trempé (400).
